Europäisches Patentamt

(19) European Patent Office   (11) Publication number: **0 183 340**

Office européen des brevets   **B1**

(12) **EUROPEAN PATENT SPECIFICATION**

(45) Date of publication of patent specification: **28.12.88**   (51) Int. Cl.⁴: **G 01 F 1/32**

(21) Application number: **85305888.1**

(22) Date of filing: **19.08.85**

(54) **Vortex shedding flowmeters.**

(30) Priority: **22.10.84 US 663113**

(43) Date of publication of application:
**04.06.86 Bulletin 86/23**

(45) Publication of the grant of the patent:
**28.12.88 Bulletin 88/52**

(84) Designated Contracting States:
**DE FR GB IT**

(56) References cited:
**EP-A-0 109 345**
**DE-A-3 006 522**
**US-A-4 307 618**
**US-A-4 470 310**

(73) Proprietor: **THE BABCOCK & WILCOX COMPANY**
**1010 Common Street P.O. Box 60035**
**New Orleans Louisiana 70160 (US)**

(72) Inventor: **Knudsen, James K.**
**991 S. Belvoir**
**South Euclid Ohio 44121 (US)**
Inventor: **Keyes IV, Marion Alvah**
**120 Riverstone Drive**
**Chagrin Falls Ohio 44022 (US)**

(74) Representative: **Cotter, Ivan John et al**
**D. YOUNG & CO. 10 Staple Inn**
**London WC1V 7RD (GB)**

**Description**

This invention relates to vortex shedding flowmeters.

Vortex shedding flowmeters are well known in the art. Such flowmeters measure the volumetric rate of flow of a fluid in a conduit through the generation of hydrodynamic oscillations at a rate which is proportional to the flow rate. The oscillations are generated by placing a blunt obstruction or bluff body in the fluid conduit, which causes vortices to be shed off the bluff body into the fluid.

There are several known means for sensing these vortices, including ultrasonic detectors, silicon strain gauges, piezoelectric devices, and self-heated thermocouples, which detect lift forces acting on the bluff body, or the flow currents caused by the vortex generation. These known techniques have several disadvantages, including limited sensitivity to flow, high sensitivity to vibration and flow-induced noise, limited temperature range, and possible difficulty associated with the use of electrical signals in potentially hazardous environments.

US Patent No. US-A-4 470 310 discloses a vortex shedding flowmeter including a bluff body capable of inducing vortex shedding when placed in a flowing fluid and sensing means, including an optical fibre. Flowmeters are also known in which the bluff body itself is constituted by an optical fibre: see European Patent Application Publication No. EP-A-0 109 345 and US Patent No. US-A-4 307 618.

According to the present invention there is provided a vortex shedding flowmeter including a bluff body capable of inducing vortex shedding when placed in a flowing fluid and sensing means, including an optical fibre, characterised in that the bluff body is mounted for rotation about its centre of inertia, a first toothed member is attached to the bluff body for rotation therewith, a second toothed member is mounted in a stationary position relative to the first toothed member, teeth of the first and second toothed members are in partial meshing relation, and said optical fibre is entrained between the teeth of the first and second toothed members to enable the sensing means to sense movement of the bluff body so as to provide a measurement of the flow rate of the fluid.

A preferred embodiment of the present invention described in detail hereinbelow utilises a fibre optic device to sense the generation of vortices by measuring the torsional displacement of a bluff body. The sensing mechanism is exterior to the fluid conduit, and a light source/detector associated with the fibre can be remotely mounted. Therefore, the device is intrinsically capable of high temperature operation. The displacement of the bluff body is measured torsionally about its centre of inertia, whereby vibration sensitivity and flow noise interference can be minimised.

The invention will now be further described, by way of illustrative and non-limiting example, with reference to the accompanying drawings, in which:

Figure 1 is a schematic sectional view of a fluid conduit in which a bluff body is mounted;

Figure 2 is a schematic illustration, with parts cut away, of a flowmeter embodying the invention;

Figure 3 is a sectional view taken along a section-indicating line 3-3 of Figure 1; and

Figures 4A and 4B are enlarged, elevational views of a portion of a sensor of the flowmeter, shown in different operating positions.

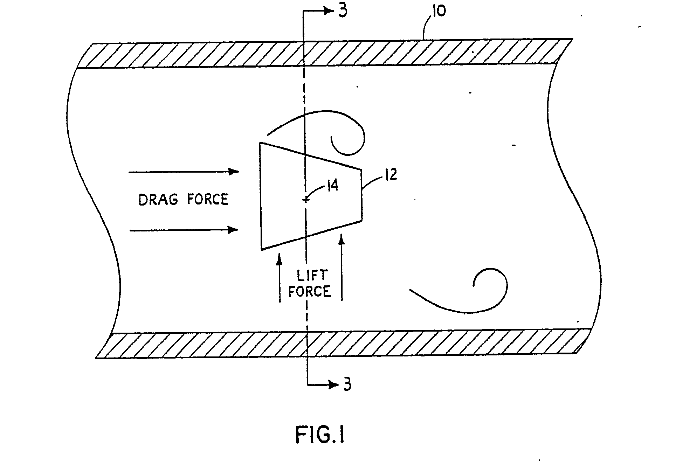

Referring to the drawings, in which like reference characters designate like or corresponding parts throughout the several figures, Figure 1 shows a fluid conduit 10 in which a bluff body 12 is mounted, and illustrates that the variation in the drag force across the face of the bluff body due to vortex shedding provides an alternating torsional force about the centre of inertia 14 of the bluff body. This is supplemented by the variation of the lift force across the lateral dimension of the body 12, which also alternates at the vortex shedding frequency.

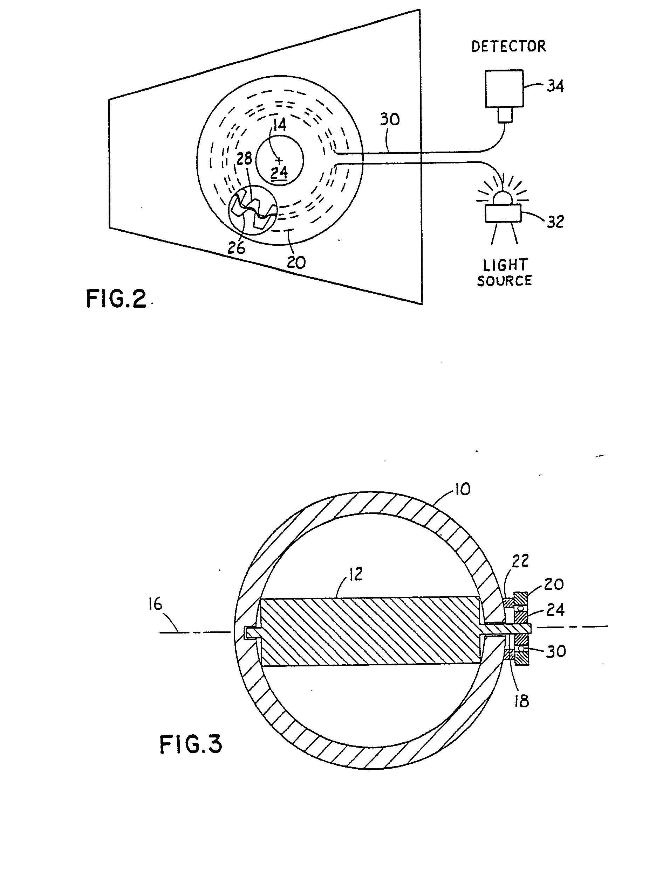

Referring to Figures 2 and 3, the bluff body 12 rotates about an axis 16 which coincides with the centre of inertia 14, and the torsional force acting thereon is transmitted outside of the conduit 10 by means of a shaft 18 extending through the wall of the conduit through an appropriate seal (not shown).

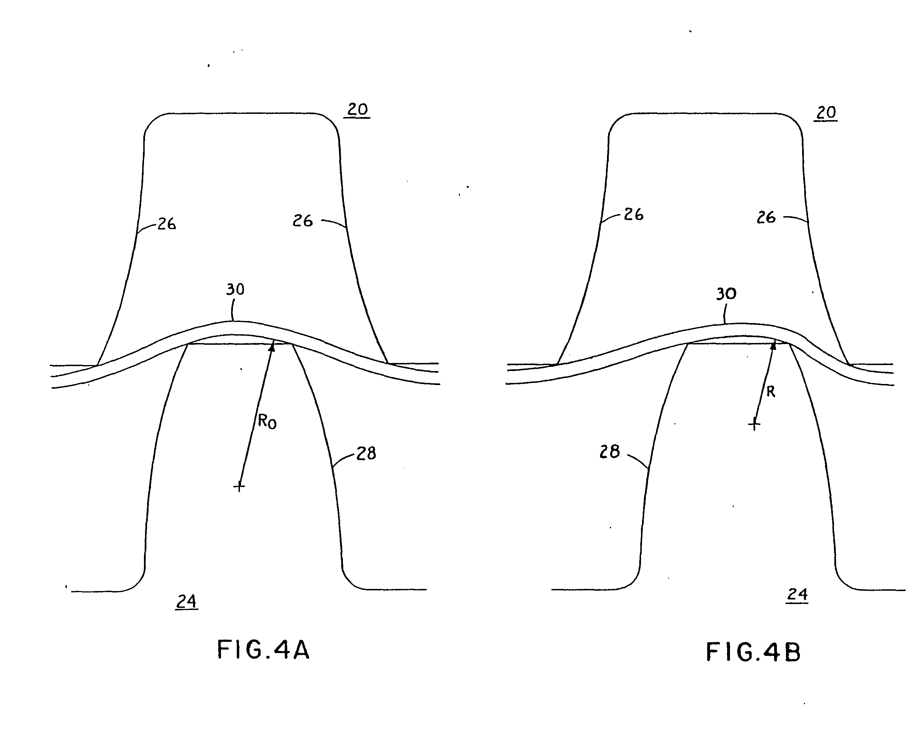

Outside of the conduit 10, an annular internally toothed reference member 20, which can be in the form of a ring gear, is rigidly attached to the side of the conduit, for example by attaching the member to a boss 22 fixed to the conduit. An externally toothed sensing member 24, which can be in the form of a pinion gear, is received concentrically within the internally toothed sensing member 20 and is fixed to the shaft 18, and thus rotates with the bluff body 12. As shown more clearly in Figures 4A and 4B, teeth 26 of the reference member 20 and teeth 28 of the sensing member 24 are only partially in mesh, and an optical fibre 30 is wound between the teeth of the sensing and reference members. Preferably, as shown, the optical fibre 30 is entrained essentially completely around the sensing member 24.

Referring to Figure 2, one end of the fibre 30 leads to a light source 32 and the other end is connected to a detector 34. When the optical fibre 30 is bent over a radius, a certain amount of the light transmitted by the fibre is lost from the core of the fibre to the cladding thereof, the amount of light intensity lost being inversely proportional to the radius of curvature of the bend. This change in light intensity, either that lost to the cladding or that transmitted through the fibre, can be measured by the detector 34.

As fluid flows through the conduit 10, the bluff body 12 vibrates, causing relative motion between the fixed reference member 20 and the rotatable sensing member 24. As best shown in Figures 4A and 4B, the relative movement between the members 20 and 24 changes the radius of curvature of the optical fibre 30 at each point where the fibre is received between adjacent teeth 26 of the reference member 20 and a tooth 28 of the sensing member 24.

Figure 4A represents a null position of the bluff body 12 and Figure 4B represents a deflected position. By comparing Figures 4A and 4B it can be seen that the radius of curvature of the optical fibre 30 changes from $R_o$ in the null position to R in the deflected position, with $R_o$ being greater than R. In operation, changes in the rate of flow of fluid in the conduit 10 will cause proportional changes in the frequency of the torsional vibration of the bluff body, and thus corresponding changes in the rate at which the radius of curvature of the optical fibre 30 changes. As discussed above, changes in the radius of curvature result in changes in the intensity of light transmitted by the optical fibre 30, which are measured by the detector 34. The rate of change of the measured light intensity can then be converted to a display of the fluid flow rate in a known manner.

In the preferred embodiment illustrated herein, a single optical fibre 30 is wound between the reference and sensing members 20 and 24. However, it is within the scope of the invention for the sensitivity of the device to be increased by increasing the number of turns of the optical fibre which are wrapped between the reference and sensing members.

## Claims

1. A vortex shedding flowmeter including a bluff body (12) capable of inducing vortex shedding when placed in a flowing fluid and sensing means (30, 32, 34), including an optical fibre (30), characterised in that the bluff body (12) is mounted for rotation about its centre of inertia (14), a first toothed member (24) is attached to the bluff body (12) for rotation therewith, a second toothed member (20) is mounted in a stationary position relative to the first toothed member (24), teeth (26, 28) of the first and second toothed members (24, 20) are in partial meshing relation, and said optical fibre (30) is entrained between the teeth (26, 28) of the first and second toothed members (24, 20) to enable the sensing means to sense movement of the bluff body (12) so as to provide a measurement of the flow rate of the fluid.

2. A flowmeter according to claim 1, including a fluid conduit (10) in which the bluff body (12) is received, and a shaft (18) fixed to the bluff body (12) and having its axis of rotation (16) extending through the centre of inertia (14), the shaft (18) extending through a wall of the fluid conduit (10), the first toothed member (24) comprising an externally toothed member fixed to the shaft (18), and the second toothed member (20) comprising an internally toothed member fixed to the fluid conduit (10).

3. A flowmeter according to claim 2, in which the optical fibre (30) is entrained essentially completely around the first toothed member (24).

4. A flowmeter according to claim 2 or claim 3, in which the first toothed member (24) comprises a pinion gear and the second toothed member (20) comprises a ring gear.

5. A flowmeter according to any one of the preceding claims, wherein the sensing means (30, 32, 34) includes a light source (32) capable of directing light into one end of the optical fibre (30) and a detector (34) connected to the opposite end of the optical fibre, the detector (34) being operable to detect changes in the intensity of light transmitted through the optical fibre (30).

## Patentansprüche

1. Strömungsmesser mit Wirbelablösung mit einem stumpfen Körper (12) zum Induzieren einer Wirbelablösung, wenn der Körper in einem strömenden Fließmittel angeordnet ist, und Abfühlmitteln (30, 32, 34), mit einer Lichtleitfaser (30), dadurch gekennzeichnet, daß der stumpfe Körper (12) zur Drehung um sein Trägheitszentrum (14) angebracht ist, ein erstes gezahntes Teil (24) an dem stumpfen Körper (12) für die Drehung mit diesem angebracht ist, ein zweites gezahntes Teil (20) in einer stationären Stellung relativ zu dem gezahnten Teil (24) angebracht ist, Zähne (26, 28) des ersten und zweiten gezahnten Teils (24, 20) in teilweisem Kämmeingriff stehen und die Lichtleitfaser (30) zwischen den Zähnen (26, 28) des ersten und zweiten gezahnten Teils (24, 20) mitgeschleppt wird, um das Abfühlmittel in die Lage zu versetzen, die Bewegung des stumpfen Körpers (12) abzufühlen und eine Messung der Strömungsgeschwindigkeit des Fluids zu besorgen.

2. Strömungsmesser nach Anspruch 1, mit einer Fluidleitung (10), in welcher der stumpfe Körper (12) aufgenommen ist, und einer Welle (18), die an dem stumpfen Körper (12) befestigt ist, wobei sich ihre Drehachse (16) durch das Trägheitszentrum (14) erstreckt, die Welle (18) sich durch eine Wand der Fluidleitung (10) erstreckt, das erste gezahnte Teil (24) ein außengezahntes Teil aufweist, welches an der Welle (18) befestigt ist, und das zweite gezahnte Teil (20) ein innengezahntes Teil aufweist, welches an der Fluidleitung (10) befestigt ist.

3. Strömungsmesser nach Anspruch 2, wobei die Lichtleitfaser (30) im wesentlichen vollständig um das erste gezahnte Teil (24) herum mitgeschleppt wird.

4. Strömungsmesser nach Anspruch 2 oder Anspruch 3, wobei das erste gezahnte Teil (24) ein Ritzel aufweist und das zweite gezahnte Teil (20) ein Hohlrad aufweist.

5. Strömungsmesser nach einem der vorhergehenden Ansprüche, wobei das Abfühlmittel (30, 32, 34) eine Lichtquelle (32) aufweist zum Richten von Licht in ein Ende der Lichtleitfaser (30) und einen Detektor (34), der mit dem gegenüberliegenden Ende der Lichtleitfaser verbunden ist, wobei der Detektor (34) betrieblich vorgesehen ist, um Änderungen der Intensität des Lichtes, welches durch die Lichtleitfaser (30) übermittelt wird, zu erfassen.

**Revendications**

1. Débitmètre à génération de tourbillon comprenant un corps renflé (12) capable de provoquer la génération d'un tourbillon lorsqu'il est placé dans un fluide en mouvement et des moyens de détection (30, 32, 34), comprenant une fibre optique (30), caractérisé en ce que le corps renflé (12) est monté à rotation autour de son centre d'inertie (14), un premier élément denté (24) est fixé au corps renflé (12) en vue d'une rotation avec lui, un second élément denté (20) est monté en position stationnaire par rapport au premier élément denté (24), les dents (26, 28) des premier et second éléments dentés (24, 20) engrenant partiellement, et ladite fibre optique (30) est entraînée entre les dents (26, 28) des premier et second éléments dentés (24, 20) pour permettre aux moyens de détection de détecter un mouvement du corps renflé (12) de façon à fournir une mesure du débit du fluide.

2. Débitmètre selon la revendication 1, comprenant une canalisation de fluide (10) dans laquelle est reçu le corps renflé (12), et un arbre (18) fixé au corps renflé (12) et ayant son axe de rotation (16) s'étendant à travers le centre d'inertie (14), l'arbre (18) s'étendant à travers une paroi de la canalisation de fluide (10), le premier élément denté (24) comportant un élément denté extérieurement fixé à l'arbre (18) et le second élément denté (20) comportant un élément denté intérieurement fixé à la canalisation de fluide (10).

3. Débitmètre selon la revendication 2, dans lequel la fibre optique (30) est disposée essentiellement complètement autour du premier élément denté (24).

4. Débitmètre selon la revendication 2 ou la revendication 3, dans lequel le premier élément denté (24) est constitué par un engrenage à pignon et le second élément denté (20) est constitué par un engrenage annulaire.

5. Débitmètre selon l'une quelconque des revendications précédentes, dans lequel les moyens de détection (30, 32, 34) comprennent une source de lumière (32) pouvant diriger de la lumière dans une extrémité de la fibre optique (30) et un détecteur (34) relié à l'extrémité opposée de la fibre optique, le détecteur (34) pouvant opérer pour détecter des variations d'intensité lumineuses transmises par l'intermédiaire de la fibre optique (30).

FIG.1

FIG.2

DETECTOR

LIGHT
SOURCE

FIG.3

FIG.4A

FIG.4B

EP 0 183 340 B1